# EUROPEAN PATENT SPECIFICATION

(11) **EP 1 262 691 B1**
(45) Date of publication and mention of the grant of the patent: **19.10.2005**
(21) Application number: 02009886.9
(22) Date of filing: 02.05.2002
(51) Int. Cl.: F16H 61/18

(54) **Manual transmission**
Handschaltgetriebe
Boîte de vitesses manuelle

(30) Priority: 10.05.2001 JP 2001140701
(43) Date of publication of application: 04.12.2002
(73) Proprietor: HONDA GIKEN KOGYO KABUSHIKI KAISHA, Minato-ku, Tokyo (JP)
(72) Inventor: Haginiwa, Masahiro, 4-1 Chuo 1-chome, Wako-shi, Saitama-ken (JP); Ezure, Yoshinobu, 4-1 Chuo 1-chome, Wako-shi, Saitama-ken (JP); Fujimoto, Shinji, 4-1 Chuo 1-chome, Wako-shi, Saitama-ken (JP); Watanabe, Yoshiharu, Haga-gun, Tochigi-ken (JP)
(74) Representative: Prechtel, Jörg

(56) References cited:
- EP-A- 0 985 858
- DE-A- 3 046 689
- US-A- 4 638 678
- US-A- 5 144 854

## Description

### BACKGROUND OF THE INVENTION

### Field of the Invention:

The present invention relates generally to a manual transmission according to the preamble of claim 1 for use in a vehicle such as an automotive vehicle i.e., to a manual transmission which comprises a miss shift preventing mechanism for preventing a driver from erroneously operating the transmission (miss shift) from a forward gear stage to a reverse gear stage during forward running.

### Description of the Prior Art:

Conventionally, a manual transmission with a miss shift preventing mechanism is known, for example, from Japanese Utility Model Registration Publication No. 5-47897. This manual transmission comprises forward first through fifth gear stage positions (hereinafter called the "first through fifth speed positions") and a reverse gear stage position (hereinafter called the "reverse position") which are disposed in a shift pattern, as shown in Fig. 15, in which the fifth speed position and reverse position are positioned at both ends of a straight line extending in a shifting direction (longitudinal direction). The manual transmission comprises a transmission lever for changing the gear stage position; and a guide plate having a guide hole in a shape similar to the shift pattern for use in guiding movements of the transmission lever. With this manual transmission, the driver operates the transmission lever along the shift pattern to select any of the first through fifth speed positions, reverse position, and neutral position.

This manual transmission also comprises a miss shift preventing mechanism comprised of a reverse gate plate, a spring, and the like. The reverse gate plate is attached on the guide plate for pivotal movements between a locking position which covers the guide hole, from above, from an intermediate portion between the fifth speed position and the reverse position to the vicinity of the reverse position and an unlocking position retracted from the guide hole. The reverse gate plate is also urged by the spring toward the locking position, so that it is normally held at the locking position.

With this manual transmission, as the driver operates the transmission lever placed at the fifth speed position toward the reverse position, the reverse gate plate resting at the locking position prevents the transmission lever from moving to the reverse position. This prevents a miss shift of the transmission lever from the fifth speed position to the reverse position during forward running.

In recent years, automotive vehicles of the type equipped with a horizontal engine (for example, horizontal FF based vehicles and the like) are going mainstream from a viewpoint of space efficiency. This type of automotive vehicle generally employs a so-called remote control type manual transmission in place of a directly operated manual transmission. The remote control type manual transmission has a transmission lever connected to a transmission gear mechanism through a wire, so that this type of manual transmission is advantageous over the directly operated one in a higher degree of freedom for the layout of the transmission lever.

In the conventional manual transmission described above, the guide plate, reverse gate plate and the like of the miss shift preventing mechanism are attached near the transmission lever, so that a space is required near the transmission lever for attaching these components. This results in an increase in the space required for surroundings of the transmission lever, and a lower degree of freedom for the layout of the transmission lever. Therefore, if the miss shift preventing mechanism is applied, for example, to the remote control type manual transmission, the aforementioned advantage cannot be utilized.

Document US-A-5,144,854 constitutes the closest prior art and discloses a manual transmission, wherein a blocking member comes into contact with a shift piece when the shift piece is pivoted around a shaft and slid axially along this shaft in order to shift the transmission from a forward position to a reverse position. The pivotal and axial movements of the shift piece are restricted by a plate member and by mounting flanges of the shaft, so that this arrangement is difficult to adapt to different gear units.

### OBJECT AND SUMMARY OF THE INVENTION

The present invention has been made to solve the foregoing problem, and it is an object of the invention to provide a manual transmission which is capable of preventing a miss shift from a forward gear stage to a reverse gear stage during forward running in a compact design and with a higher degree of freedom from the design.

To achieve the above object, the present invention provides a manual transmission according to claim 1 which comprises a case; a selector attached to the case and having an engaging portion, wherein the selector is arranged for movement in a predetermined selecting direction for selection associated with a selecting operation, and for a shifting movement in a predetermined shifting direction associated with a shifting operation; and a plurality of shift forks contained in the case and arranged for movement in a predetermined direction, wherein each of the shift forks has an engaged portion with which the engaging portion of the selector selectively come into engagement, associated with the select movement of the selector, is moved in the predetermined direction through the engaging portion and the engaged portion associated with the shift movement of the selector to select any of a plurality of forward transmission gear stages and a reverse transmission gear stage. The selector is configured to take a forward position and a reverse position when selecting a predetermined one of the plurality of forward transmission gear stages and the reverse transmission gear stage, respectively, wherein the forward position and the reverse position are defined on both sides in the shifting direction of a predetermined intermediate position in the selecting direction. The manual transmission further comprises a blocking member attached to the case, and movable between a blocking position at which the blocking member comes into contact with the selector when the selector is shifted from the forward position to the reverse position to block the selector from shifting to the reverse position, and a retracting position retracted from the blocking position; and urging means for urging the blocking member toward the blocking position.

According to this manual transmission, as the selector is moved associated with the driver's selecting operation, the engaging portion of the selector selectively comes into engagement with the engaged portion of any of the plurality of shift forks. As the selector is moved associated with the driver's shifting operation, the shift fork is moved in a predetermined direction through the engaging portion and engaged portion, associated with the movement of the selector, to select any of the plurality of forward transmission gear stages and reverse transmission gear stage, permitting a transmission operation with the selected gear stage. The blocking member is normally urged by the urging means toward the blocking position, so that if the driver's erroneous operation causes the selector to be shifted from a forward position when a predetermined one forward transmission gear stage is selected to the reverse position when the reverse transmission gear stage is selected during a transmission operation, the blocking member comes into contact with the selector at the blocking position, thereby preventing the selector from shifting to the reverse position. In this way, it is possible to prevent a miss shift, made by the driver, from a forward transmission gear stage to the reverse transmission gear stage. In addition, since the configuration for preventing such a miss shift can be implemented by a small number of simple parts such as a blocking member, urging means and the like, it is possible to reduce a space required to attach these parts and increase the degree of freedom for the layout of these parts. Further, since these parts are attached to a case which contains shift forks, the reverse gate plate for preventing a miss shift and the like need not be disposed near the transmission lever, unlike the prior art, thereby making it possible to correspondingly simplify surroundings of the transmission lever, and increase the degree of freedom for the design including the layout of the transmission lever. Consequently, when the present invention is applied, for example, to a remote control type manual transmission, the advantage of the remote control type manual transmission can be utilized.

The foregoing manual transmission of the present invention further comprises a pivotal movement restricting member provided in the case, wherein the selector includes a shaft attached to the case, a shift piece attached to the shaft for movements in an axial direction of the shaft and pivotal movements about the axis of the shaft, and an interlock attached to the shaft for pivotal movement integral with the shift piece. The movement for selection and the shifting movement of the selector are performed by a pivotal movement of the shift piece and the interlock about the axis, and a movement of the shift piece in the axial direction, respectively. The interlock includes two axial movement restricting members spaced apart from each other by a predetermined spacing for restricting a movable range of the shift piece in the axial direction within the shift movement. The pivotal movement restricting member stops the interlock at two predetermined pivotal positions to restrict a pivotable range of the interlock within a range corresponding to the movement for selection.

According to this preferred embodiment of the manual transmission, the shift piece and interlock are pivotally moved about the axis to provide a movement for selection, while the shift piece is moved in the axial direction to provide a shifting movement. The movable range of the shift piece in the axial direction is restricted within a range of the shifting movement by the shift pieces coming into contact with the two axial movement restricting members of the interlock, while the pivotable range of the interlock is restricted within a range corresponding to the movement for selection by the interlock being stopped by the pivotal movement restricting member at the two predetermined pivotal positions. Since a selecting position for each gear stage can be defined by restricting the ranges of the shifting movement and the movement for selection in the foregoing manner, the conventional guide plate is eliminated, thereby making it possible to further simplify surroundings of the transmission lever.

Preferably, the manual transmission of the present invention further comprises a holder having a stopper integrally formed therewith, and fixed to the case near the stopper, wherein the blocking member comprises a cam pivotably attached to the holder, and coming into contact with the stopper to stop at the retracting position, and the selector is configured movable to the intermediate position between the forward position and the reverse position to pivotally move the cam from the blocking position to the retracting position.

According to this preferred embodiment of the manual transmission, as the selector is moved to the intermediate position associated with a selecting operation of the driver, the cam is pivotally moved from the blocking position to the retracting position, thereby permitting the selector to shift to the reverse position. In other words, the reverse transmission gear stage can be selected. The cam pivotally moved to the retracting position comes into contact with the stopper and stopped at the blocking position. Since the stopper is arranged near the location at which the holder is fixed to the case, it is possible to prevent the holder from deforming due to an impact applied thereto when the cam comes into contact with the stopper, as compared with the stopper which is arranged at another location. In addition, the miss shift can be prevented by a relatively simple configuration composed of a holder, a cam and a stopper.

### BRIEF DESCRIPTION OF THE DRAWINGS

Fig. 1 is a partially broken front view generally illustrating the configuration of transmission gears and their surroundings in a manual transmission according to one embodiment of the present invention;
Fig. 2 is a partially broken right side view generally illustrating the configuration of the transmission gears and their surroundings in the manual transmission;
Fig. 3 is a cross-sectional view taken along a line A-A in Fig. 2;
Fig. 4 is a cross-sectional view taken along a line B-B in Fig. 2;
Fig. 5 is a front view generally illustrating a selector;
Figs. 6A and 6B are a front view and a cross-sectional view taken along a line C-C of a shift piece, respectively;
Figs. 7A and 7B are a front view and a left side view of an interlock;
Figs. 8A and 8B are front views for explaining the operation of the selector;
Figs. 9A and 9B are front views for explaining the operation of the shift piece;
Fig. 10 is a partially broken right side view illustrating a positional relationship between the shift piece and a reverse lock cam mechanism;
Figs. 11A, 11B and 11C are a front view, a right cross-sectional view and a bottom view illustrating the configuration of the reverse lock cam mechanism;
Fig. 12 is a bottom view for explaining the operation of the reverse lock cam mechanism when a transmission operation is performed from a fifth speed position to a fourth speed position;
Fig. 13 is a bottom view for explaining the operation of the reverse lock cam mechanism when a selecting operation is performed from a neutral position to the fifth speed position and to a reverse position;
Fig. 14 is a partially broken right side view illustrating shift forks for first and second speeds, for third and fourth speeds, and for fifth speed and reverse; and
Fig. 15 is a diagram illustrating a shift pattern of a manual transmission.

### DETAILED DESCRIPTION OF THE EMBODIMENT

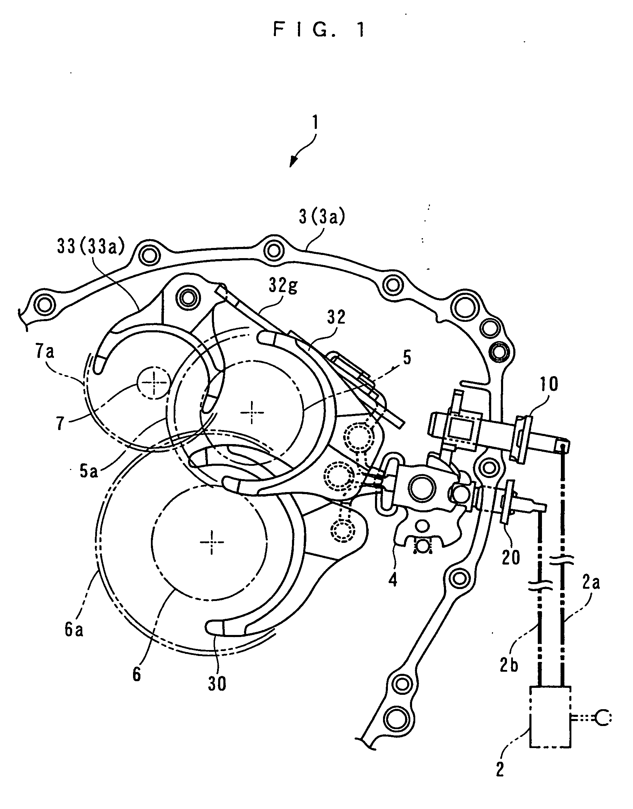

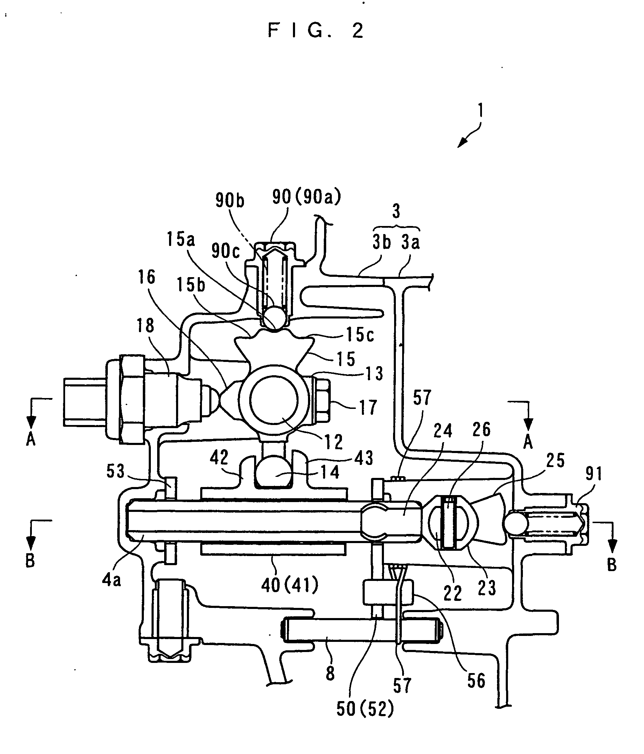

In the following, a manual transmission according to one embodiment of the present invention will be described with reference to the accompanying drawings. Fig. 1 generally illustrates the configuration of transmission gears and their surroundings in the manual transmission of this embodiment. It should be noted that hatchings, generally filled in cross-sectional portions of figures, are omitted in Fig. 1 for facilitating the understanding (the same is applied to other figures such as Figs. 2 - 4). In the following, the near side and far side in Fig. 1 are called the front side and rear side, respectively, and the left side and right side in the figure are called the left side and right side, respectively.

The illustrated manual transmission 1 is classified as a so-called remote control type, wherein a transmission lever 2 is connected to a transmission gear section through transmission cables 2a, 2b. The manual transmission 1 comprises forward first through fifth gear stages and one reverse gear stage. The manual transmission 1 has forward first through fifth gear stage positions (hereinafter called the "first through fifth speed positions") 1st - 5th, and a reverse gear stage position (hereinafter called the "reverse position") R disposed around a neutral position N in a shift pattern as illustrated in Fig. 15.

Specifically, the third speed position 3rd and fourth speed position 4th are respectively defined at positions spaced apart by a first predetermined distance from the neutral position N on both sides of a shifting direction. Similarly to these, the first speed position 1st and second speed position 2nd are respectively defined at positions spaced apart by the first predetermined distance on both sides of the shifting direction from a predetermined first/second speed position P12 spaced apart by a second predetermined distance from the neutral position N in one of selecting directions. Further, the fifth speed position 5th and reverse position R are respectively defined similarly at positions spaced apart by the first predetermined distance on both sides of the shifting direction from a predetermined fifth/R position P5R spaced apart by the second predetermined distance from the neutral position N in the other of the selecting directions.

The manual transmission 1 further comprises a main case 3 which includes the transmission lever 2, a clutch case 3a and a transmission case 3b integrally assembled thereinto; a shift lever mechanism 10 and a select lever mechanism 20 attached to the main case 3; a selector 4 coupled to these shift lever mechanism 10 and select lever mechanism 20; three shift forks 30 - 32 for the first/second speeds, third/fourth speeds, and fifth speed/reverse, respectively, to which the selector 4 is selectively coupled; a reverse shift fork 33 coupled to the shift fork 32 for fifth speed/reverse; and a main shaft 5, a counter shaft 6, a reverse shaft 7 and the like contained in the main case 3.

Each of the shafts 5 - 7 is rotatably attached to the main case 3 through a plurality of bearings, not shown. Also, a plurality of transmission gears 5a, 6a, 7a, comprised of helical gears, are attached to these shafts 5 - 7, respectively. The plurality of transmission gears 5a, which are spline-fitted on the main shaft 5, include an axially slidable spline gear, and a fixed gear. The plurality of transmission gears 6a, 7a are also constructed in a similar manner. These transmission gears 5a - 7a constitute gear pairs for the aforementioned forward first through fifth gear stages and reverse gear stage.

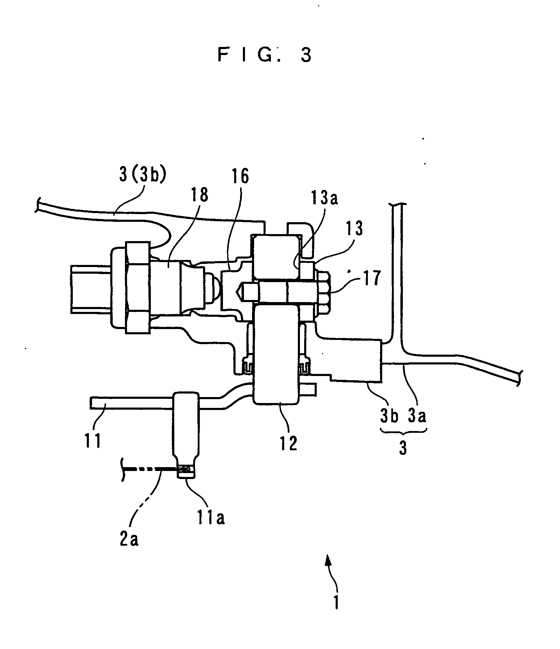

As illustrated in Figs. 2 and 3, the shift lever mechanism 10 comprises a shift lever 11, a pivot shaft 12, a shift arm 13, and the like. The pivot shaft 12 extends from left to right while slightly inclined downward toward the right from the horizontal level, and is pivotably attached to the main case 3.

The shift lever 11 extends in front from a right end of the pivot shaft 12, and comprises a pin 11a disposed halfway. The pin 11a protrudes to the right, and one end of the transmission cable 2a is connected to a leading end of the pin 11a. The other end of the transmission cable 2a is connected to the transmission lever 2. In this way, the shift lever 11 is connected to the transmission lever 2 through the transmission cable 2a, and therefore pivotally moves the pivot shaft 12 as the transmission lever 2 is shifted.

The shift arm 13 comprises an arm 14, a cam 15 and a protrusion 16 formed integrally with one another, and a throughhole 13a extending from left to right. The shift arm 13 is fitted on the pivot shaft 12, extending through the throughhole 13a, at a location near a left end and attached to the pivot shaft 12 through a bolt 17. The arm 14 protrudes downward from the pivot shaft 12, and has its lower end engaged with a shift piece 40, later described, of the selector 4. The cam 15 in turn protrudes upward, and a cam face formed on a top surface thereof is formed with three, i.e, center, front and rear recesses 15a, 15b, 15c. The front and rear recesses 15b, 15c are symmetrically arranged about the central recess 15a.

A detent 90 is provided at a location of the main case 3 corresponding to the cam 15. The detent 90 is composed of a hollow bolt 90a, a coil spring 90b, a ball 90c, and the like. The detent 90 is fixed to the main case 3, as extending in the vertical direction, by screwing and fastening the hollow bolt 90a into a female screw hole of the main case 3.

The hollow bolt 90a has a hole with an open lower end, and the coil spring 90b and ball 90c are contained in the hole. The ball 90c is urged downward by the coil spring 90b so that it is held as protruding from the opening, of the hollow bolt 90a, and is arranged for engagement with either of the three recesses 15a - 15c of the cam 15.

The cam 15 is pivotably arranged by pivotal movements of the pivot shaft 12 associated with a shift operation of the transmission lever 2, against an urging force of the coil spring 90b of the detent 90, to a central position (position indicated in Fig. 2) at which the central recess 15a comes into engagement with the detent 90, to a first position at which the front recess 15b comes into engagement with the detent 90, and to a second position at which the rear recess 15c comes into engagement with the detent 90. More specifically, the cam 15 is held at the central position when the transmission lever 2 remains between the first/second speed position P12 and the fifth speed/R position P5R, including the neutral position N. Also, when the transmission lever 2 is operated to change to an odd-numbered gear stage position (first speed position 1st, third speed position 3rd, fifth speed position 5th), the cam 15 is pivotally moved to the second position in the counter-clockwise direction in Fig. 2, causing the rear recess 15c to come into engagement with the detent 90. Conversely, when the transmission lever 2 is operated to change to an even-numbered gear stage position (second speed position 2nd, fourth speed position 4th) or to the reverse position R, the cam 15 is pivotally moved to the first position in the clockwise direction in Fig. 2, causing the front recess 15b to come into engagement with the detent 90.

The protrusion 16, which protrudes in front from the pivot shaft 12, is in contact with a,detection switch 18. This detection switch 18 detects which of the three positions the cam 15 is present, based on a change in the contact state of the detection switch 18 with the protrusion 16 caused by a pivotal movement of the protrusion 16 associated with a pivotal movement of the pivot shaft 12.

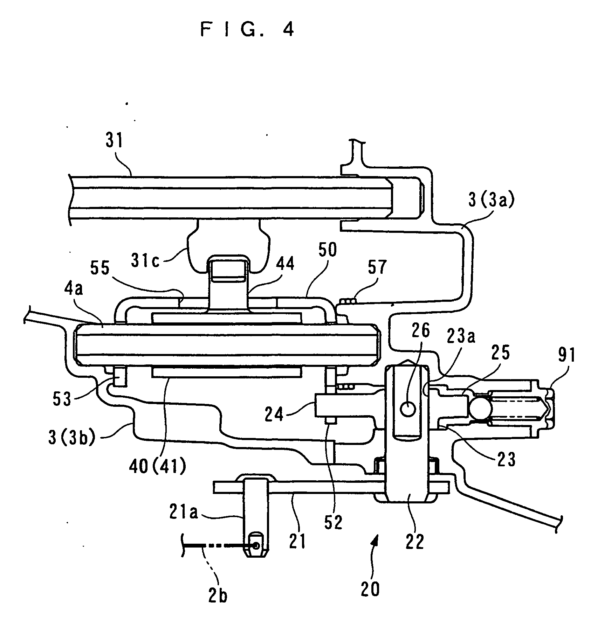

As illustrated in Figs. 2 and 4, the select lever mechanism 20 comprises a select lever 21, a pivot shaft 22, a select arm 23, and the like. The pivot shaft 22 is in parallel with the pivot shaft 12 of the shift lever mechanism 10, extends through the main case 3, and is pivotably attached to the main case 3.

The select lever 21 extends in front from a right end of the pivot shaft 22, and a pin 21a is disposed at a leading end of the select lever 21. The pin 21a protrudes to the right, and one end of the transmission cable 2b is connected to a leading end of the pin 21a. The other end of the transmission cable 2b is connected to the transmission lever 2. In this way, the select lever 21 is connected to the transmission lever 2 through the transmission cable 2b, and pivotally moves the pivot shaft 22 as the transmission lever 2 is operated for selection.

The select arm 23 comprises an arm 24 and a cam 25 formed integrally with each other, and a throughhole 23a extending between the arm 24 and cam 25. The select arm 23 is attached to the pivot shaft 22 through a stopper pin 26 with the pivot shaft 22 fitted in the throughhole 23a at a location near a left end thereof. The arm 24 protrudes in front from the pivotal shaft 22, and its leading end is engaged with an interlock 50, later described, of the selector 4. The cam 25 in turn protrudes to the rear, opposite to the arm 24, and a recess is formed on a cam face formed on a rear surface of the cam 25.

At a location of the main case 3 corresponding to the cam 25, a detent 91 is disposed horizontally, similarly to the detent 90. The detent 91 is in contact with the cam 25 from the rear to urge the same in front, and is normally in engagement with the recess of the cam 25. With this structure, the select arm 23 is held horizontally as illustrated in Fig. 2 unless the transmission lever 2 is operated for selection, and is pivotally moved within a predetermined range, later described, against an urging force of the detent 91, by a pivotal movement of the pivot shaft 22 associated with an operation of the transmission lever 2 for selection.

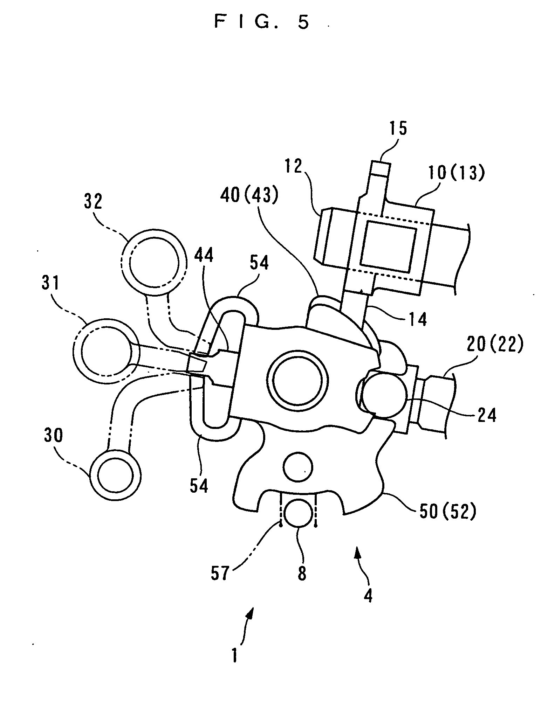

As illustrated in Fig. 5, the selector 4 comprises a shaft 4a, a shift piece 40, the interlock 50, and the like. The shaft 4a, which extends in the longitudinal direction, is pivotably attached to the main case (see Figs. 2 and 4).

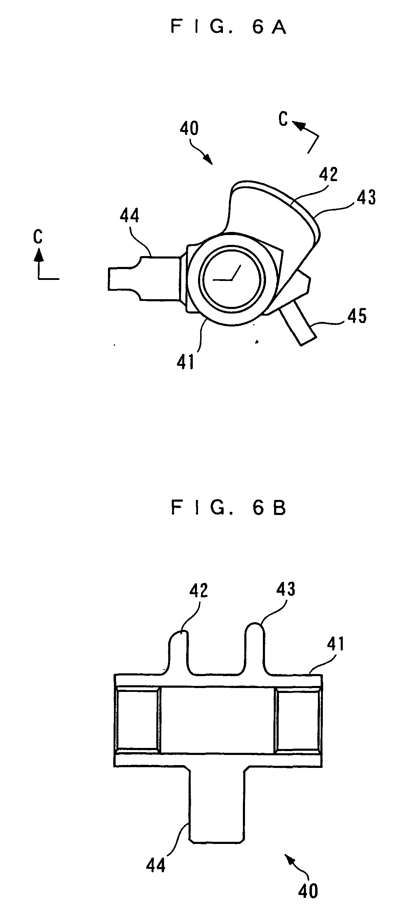

As illustrated in Fig. 6, the shift piece 40 comprises a sleeve 41, a pair of engaging ears 42, 43, an arm 44, a pin 45, and the like, all of which are formed integrally with one another. These engaging ears 42, 43, arm 44 and pin 45 are disposed at predetermined locations on the outer peripheral surface of the sleeve 41, respectively. The sleeve 41 is fitted on the shaft 4a, so that the shift piece 40 is slidably and pivotably attached to the shaft 4a.

The two engaging ears 42, 43, opposing each other, protrude from the sleeve 41. The arm 14 of the shift arm 13 is in engagement between both engaging ears 42, 43 (see Figs. 2 and 5). With this structure, the shift piece 40 is slidable in the longitudinal direction on the shaft 4a, associated with a pivotal movement of the shift arm 13, i.e., associated with a shifting operation of the transmission lever 2.

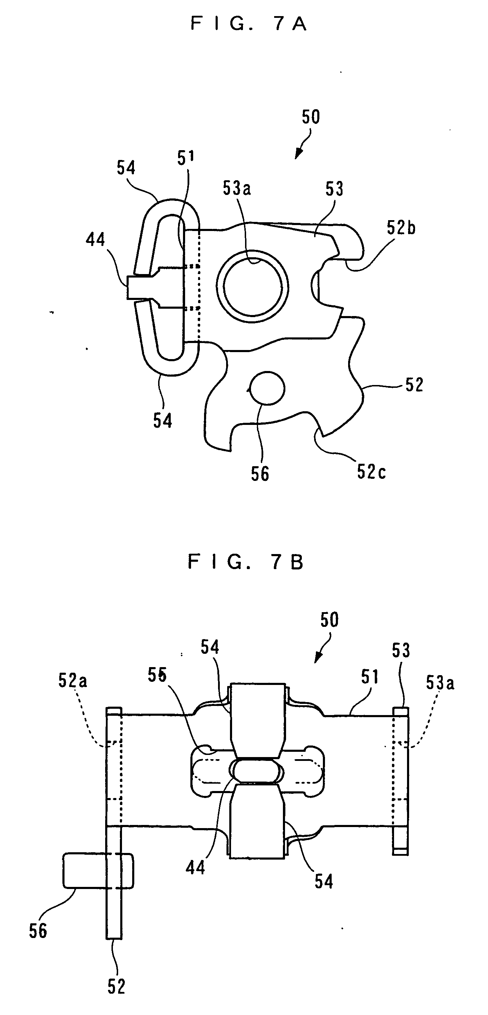

The arm 44 (engaging portion) protrudes in front from the sleeve 41, and is fitted in an elongated hole 55 of the interlock 50 (see Fig. 7). When the cam 15 of the shift lever mechanism 10 is present at the neutral position, the arm 44 remains at a position indicated by a solid line in Fig. 7B. Also, the arm 44 is moved between positions indicated by two-dot chain lines in Fig. 7B when the shift piece 40 slides in the longitudinal direction, associated with a pivotal movement of the shift arm 13.

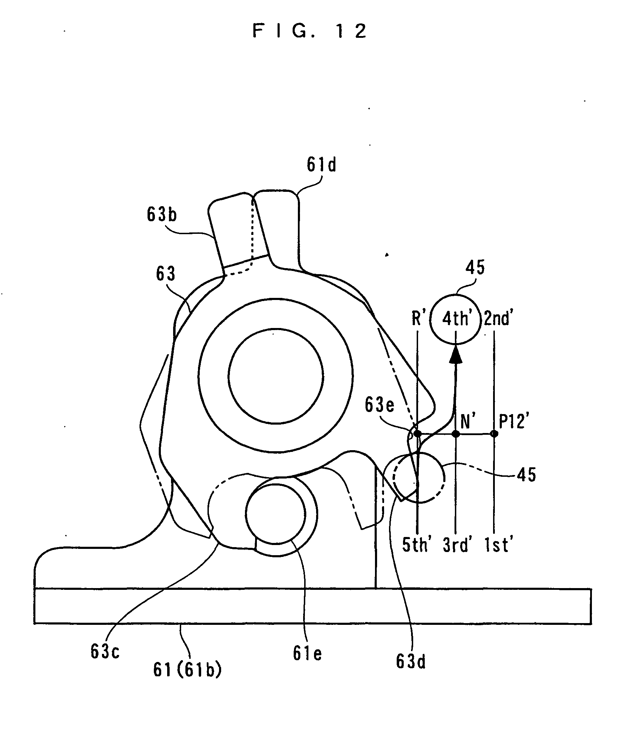

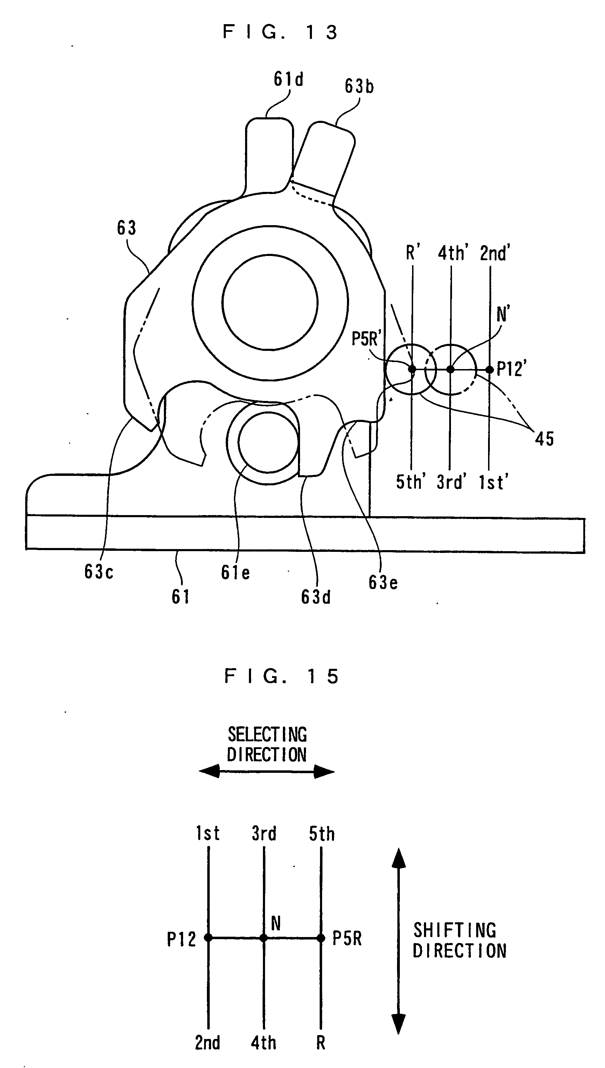

The pin 45 protrudes diagonally downward to the rear from the sleeve 41, and is moved to positions corresponding to the first through fifth speed positions 1st - 5th and the reverse position R, associated with pivotal and sliding movements of the shift piece 40, as it draws a trajectory similar to the shift pattern (see Figs. 12, 13), as described later.

As illustrated in Fig. 7, the interlock 50 comprises a base 51, a cam 52, a stay 53 and a pair of guide arms 54, all of which are formed integrally with one another, and is arranged to surround the shift piece 40 (see Fig. 5). The base 51 is made in a flat plate shape, and the elongated hole 55 is formed at a central portion of the base 51, extending in a longitudinal direction.

The guide arms 54, which have a U-shaped cross-section, extend from a central portion of the base 51 to both sides of the same in a width direction. A slight gap is formed between leading ends of both guide arms 54. A leading end of the arm 44 of the shift piece 40 protrudes from this gap. Also, these guide arms 54 and arm 44 have substantially the same width (the length in the longitudinal direction) as one another.

The cam 52 (axial movement restricting member) and stay 53 (axial movement restricting member) are formed with holes 52a, 53a, respectively. The shaft 4a is fitted into these holes 52a, 53a to pivotably attach the interlock 50 to the shaft 4a. Also, as illustrated in Fig. 2, the surfaces of the cam 52 and stay 53 are lightly in contact with the main case 3, thereby disabling the interlock 50 to move in the longitudinal direction.

The cam 52 has a recess 52b formed on a right surface, and a restricting recess 52c formed on a bottom surface. The recess 52b is in engagement with a leading end of the arm 24 of the select arm 23, thereby causing the interlock 50 to pivotally move associated with a pivotal movement of the select arm 23.

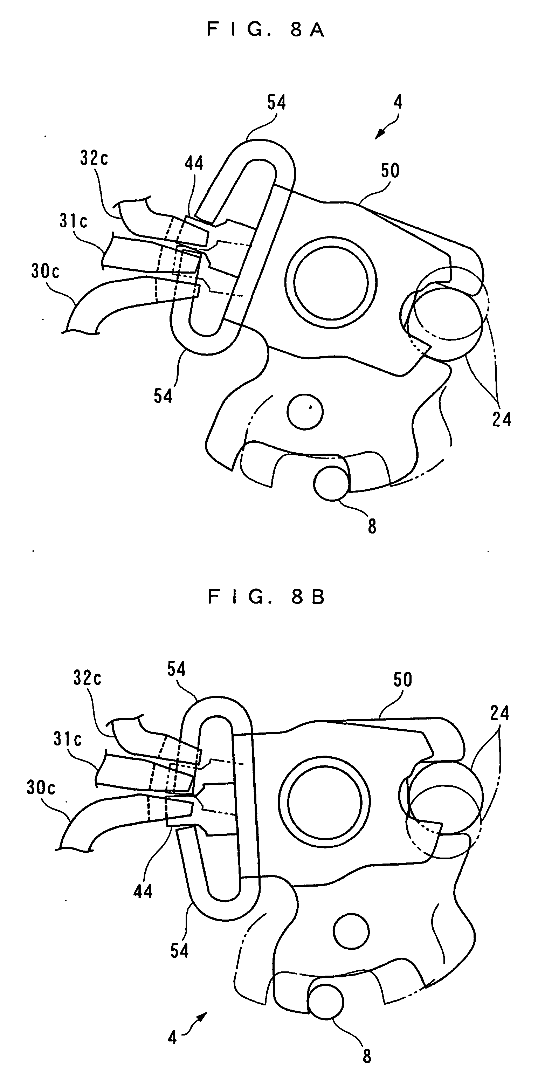

Near the restricting recess 52c, a stopper shaft 8 (pivotal movement restricting member) is provided (see Fig. 5). The stopper shaft 8 extends in the longitudinal direction, and fixed to the main case 3 at its both ends (see Fig. 2). As illustrated in Fig. 8, as the interlock 50 is pivotally moved in the clockwise or counter-clockwise direction in Fig. 8, the restricting recess 52c comes into contact with the stopper shaft 8 which stops the interlock 50. A pivotable range of the interlock 50, i.e., a pivotable range of the select arm 23 is restricted in the foregoing manner. In other words, the transmission lever 2 is restricted in the stroke of its selecting operation.

The cam 52 and stay 53 are arranged in parallel with each other and with a predetermined spacing interposed therebetween. As the shift piece 40 slides in the longitudinal direction as mentioned above, both ends thereof come in contact with the cam 52 and stay 53, respectively, thereby restricting a slidable range of the shift piece 40. As a result, a pivotable range of the shift arm 13 is restricted between the first position and the second position of the cam 15. In other words, the transmission lever 2 is restricted in the stroke of its shift operation. Alternatively, the slidable range of the shift piece 40 may be restricted by the arm 44 of the shift piece 40 which comes into contact with an edge of the elongated hole 55, in which case two longitudinal edges of the elongated hole 55 act as two axial movement restricting members, respectively.

The cam 52 is further provided with a pin 56 which protrudes to the rear. The main case 3 is also provided with a twisted coil spring 57 in close proximity to the back end of the cam 52. Both ends of the twisted coil spring 57 extend downward to sandwich the pin 56 and stopper shaft 8 (see Figs. 2, 5). With the foregoing structure, the interlock 50 is held at a position indicated in Fig. 5 by an urging force of the twisted coil spring 57, when the transmission lever 2 is present between the first/second speed position P12 including the neutral position N and the fifth speed/R position P5R.

With the foregoing structure in which the shift lever 14 is present at the position indicated in Fig. 2, when the interlock 50 is pivotally moved in the clockwise direction in Fig. 8 with the arm 44 positioned between the guide arms 54 (in a positional relationship indicated by solid lines in Fig. 7B, i.e., when the transmission lever 2 is at the neutral position N), the arm 44 is pressed by the guide arm 54, causing the shift piece 40 to pivotally move together with the interlock 50. When the interlock 50 is stopped by the stopper shaft 8, the shift piece 40 comes into engagement with an arm 32c, later described, of the fifth speed/reverse shift fork 32 (see Fig. 8A). When the interlock 50 is pivotally moved in the counter-clockwise direction in Fig. 8, reverse to the foregoing, and stopped by the stopper shaft 8, the arm 44 comes into contact with an arm 30c, later described, of the first/second speed shift fork 30 (see Fig. 8B).

As the shift lever 14 is pivotally moved in the clockwise or counter-clockwise direction in Fig. 2, the shift piece 40 slides in front or to the rear, respectively. Associated with the foregoing pivotal and sliding movements of the shift piece 40, the pin 45 is moved while it two-dimensionally draws a trajectory similar to the shift pattern of the transmission lever 2. Specifically, as illustrated in Fig. 13, the pin 45 is moved between first through fifth speed corresponding positions 1st' - 5th', a reverse corresponding position R', a neutral corresponding position N', a first/second speed corresponding position P12', and a fifth speed/R corresponding position P5R' corresponding to the aforementioned first through fifth speed positions 1st - 5th, reverse position R, neutral position N, first/second speed position P12 and fifth speed/R position P5R, respectively.

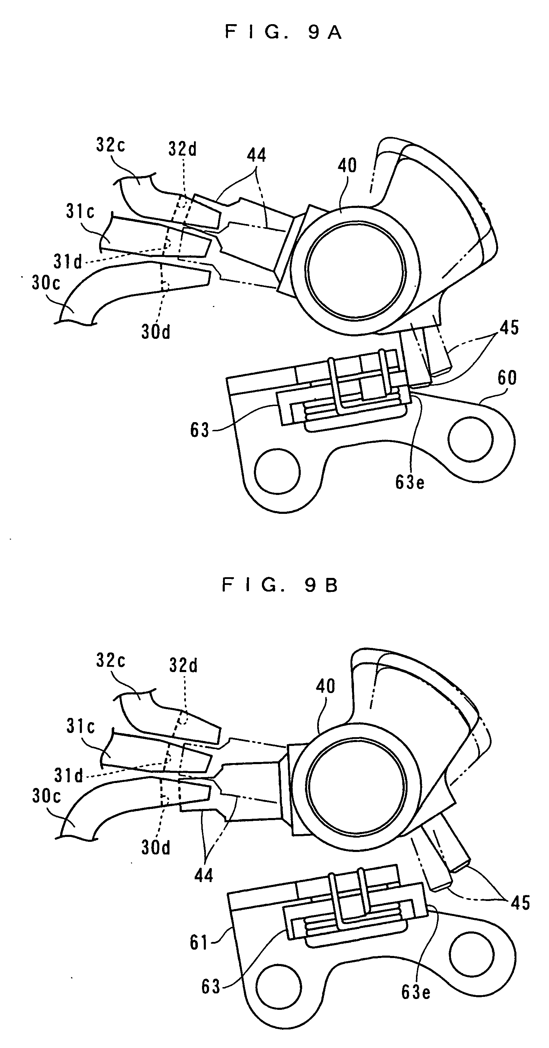

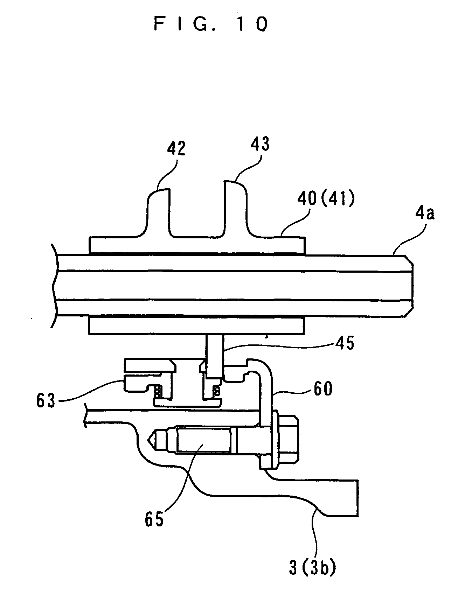

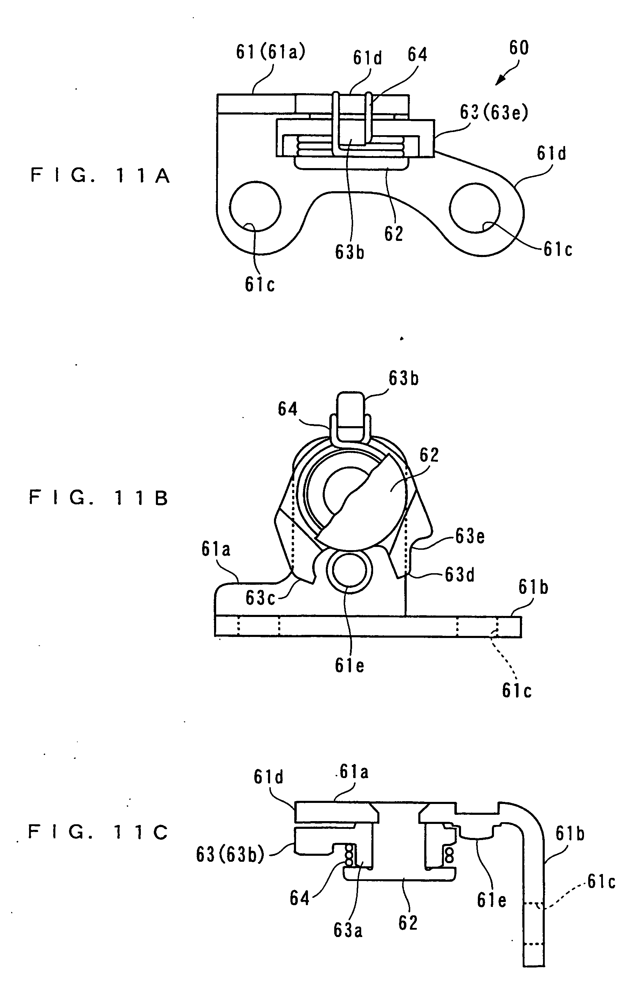

As illustrated in Figs. 9 and 10, a reverse lock cam mechanism 60 is provided below and in close proximity to the shift piece 40. The reverse lock cam mechanism 60 is provided for preventing the driver from erroneously shifting the transmission lever 2 at the fifth speed position 5th to the reverse position R, and comprises a holder 61, a rivet 62, a cam 63, a twisted coil spring 64, and the like, as illustrated in Fig. 11.

The holder 61 comprises a flat base 61a, and an attachment 61b oriented perpendicular to and integrally formed with the base 61a. The attachment 61b is formed with two bolt holes 61c. The holder 61 is fixed to the main case 3 by bolts 65 (only one of them is shown) inserted into the respective bolt holes 61c. The base 61a comprises a protrusion 61d protruding in front, and a stopper 61e integrally formed near the attachment 61b in circular cross section, and protruding downward.

The rivet 62 is fixed to the base 61a by caulking. The cam 63 (blocking member) is disposed between the head of the rivet 62 and the base 61a, and has a cylindrical base 63a; a protrusion 63b protruding in front from the base 63a; and two arms 63c, 63d protruding to the rear from the base 63a. The rivet 62 is fitted in an inner hole of the, thereby attaching the cam 63 pivotably to the holder 61.

As the cam 63 is pivotally moved in the counter-clockwise direction in Fig. 12, the arm 63c comes into contact with the stopper 61e at an operating position (position indicated by a solid line in Fig. 12), and stopped by the same. On the other hand, as the cam 63 is pivotally moved in the clockwise direction in Fig. 13, the arm 63d comes into contact with the stopper 61e at a retracting position (position indicated by a solid line in Fig. 13), and stopped by the same. In the foregoing manner, a pivotal range of the cam 63 is restricted by the stopper 61e between the operating position and retracting position.

The twisted coil spring 64 (urging means) is arranged to surround the base 63a, and has both ends extending upward as they sandwich the two protrusions 61d, 63b therebetween. In this way, the cam 63 is normally held at a blocking position indicated in Fig. 11B, by an urging force of the twisted coil spring 64.

A right side surface of the arm 63d serves as a cam face 63e which is a combination of a curved concave portion and a curved convex portion. The shape of the cam face 63e including these concave and convex portions is set in the following manner. Specifically, as illustrated in Fig. 13, as the pin 45 is moved from the neutral corresponding position N' to the fifth speed/R corresponding position P5R', the cam 63 is pivotally moved from the blocking position to the retracting position through the pin 45 in contact with the cam face 63e. Also, as illustrated in Fig. 12, when the pin 45 is moved from the fifth speed corresponding position 5th' to the reverse corresponding position R', the cam 63 is pivotally moved from the blocking position to the operating position through the pin 45 in contact with the cam face 63e. The cam face 63e is set to guide the pin 45 toward the neutral position N during this pivotal movement.

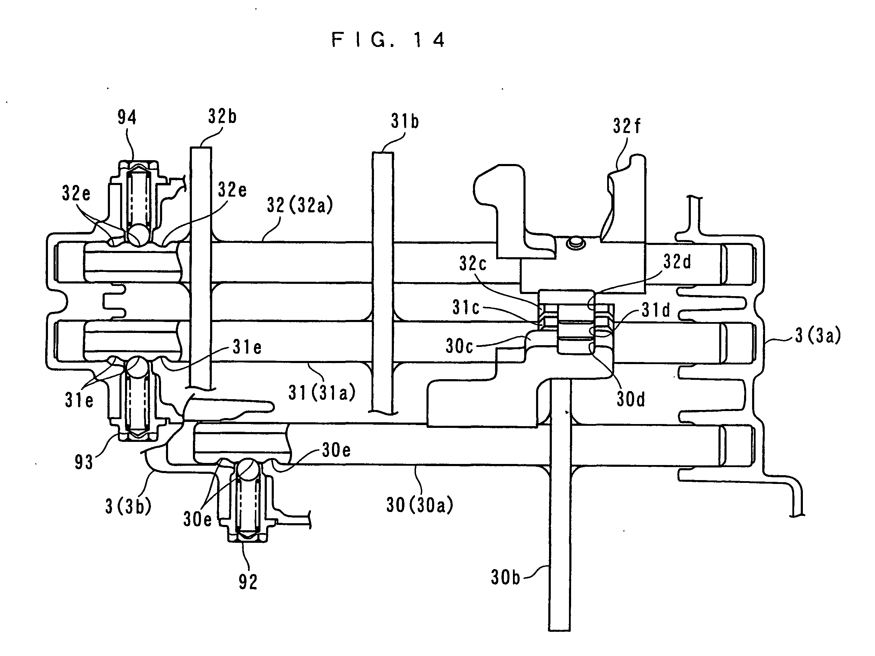

Next, the aforementioned four shift forks 30 - 33 will be described with reference to Fig. 14, the three forks 30 - 32 are constructed in a similar manner to one another except for a portion, so that the following description will be centered on the third/fourth speed shift fork 31.

As illustrated in Fig. 14, the third/fourth speed shift fork 31 comprises a shaft 31a, a fork 31b and an arm 31c which are integrally formed with one another. The shaft 31a, extending in the longitudinal direction, is pivotably attached to the main case 3, and arranged for slidable movements in the longitudinal direction within a predetermined range.

The fork 31b is fixed at a central portion of the shaft 31a, extends to the left from the fixed position, and is fitted in a groove (not shown) of a transmission gear 5a of spline gear type. In this way, the third/fourth speed shift fork 31 slides in front or to the rear to slide the transmission gear 5a in front or to the rear through the fork 31b to come into mesh with a transmission gear 6a of fixed gear type, which constitutes a fourth speed gear pair or a third speed gear pair together with the transmission gear 5a. The foregoing operation results in selection of the fourth speed gear stage or third speed gear stage.

The arm 31c (engaged portion) extends to the rear from the shaft 31a to the selector 4. A recess 31d is formed in a leading end portion. The width and depth of the recess 31d are set such that the arm 44 of the shift piece 40 comes into engagement with the guide arm 54 of the interlock 50 with a slight gap defined between the arm 44 of the shift piece 40 and a leading end of the guide arm 54 of the interlock 50. When the transmission lever 2 is present at the neutral position N, the arm 44 is fitted into the recess 31d.

Three recesses, i.e., front, central and rear recesses 31e are formed on the lower side of a leading end portion of the shaft 31a. A detent 93 similar to the aforementioned detent 90 is provided at a location of the main case 3 corresponding to these recesses 31e. As either of the recesses 31e comes into engagement with the detent 93, the third/fourth speed shift fork 31 is stopped at a position corresponding to the engaged recess 31e.

As illustrated in Fig. 14, the third/fourth speed shift fork 31 is normally held as stopped to the detent 93 by the central recess 31e. When the transmission lever 2 is shifted from the neutral position N to the fourth speed position 4th, the third/fourth speed shift fork 31 is pressed in front by the arm 44, slid, and stopped to the detent 93 by the rear recess 31e. On the contrary, when the transmission lever 2 is shifted from the neutral position N to the third speed position 3rd, the third/fourth speed shift fork 31 is pressed to the rear by the arm 44, slid, and stopped to the detent 93 by the front recess 31e.

Similar to the third/fourth speed shift fork 31, the first/second speed shift fork 30 also comprises a shaft 30a, a fork 30b and an arm 30c which are formed integrally with one another. The fork 30b is fitted in a groove (not shown) of the transmission gear 6a of spline gear type. When the first/second speed shift fork 30 slides in front or to the rear, the transmission gear 6a is pressed by the fork 30b to slide. Then, the transmission gear 6a comes into mesh with the transmission gear 5a of fixed gear type, which constitutes a second speed gear pair or a first speed gear pair together with the transmission gear 6a, thereby selecting the second speed gear stage or first speed gear stage.

The arm 30c (engaged portion) is also formed with a recess 30d similar to the aforementioned recess 31d. As illustrated in Fig. 9B, when the shift piece 40 is pivotally moved in the counter-clockwise direction in Fig. 9, the arm 44 is fitted into the recess 30d. The shaft 30a is also formed with three recesses 30e similar to the aforementioned recesses 31e. A detent 92 similar to the aforementioned detent 90 is provided at a location of the main case 3 corresponding to these recesses 30e. The first/second speed shift fork 30 is normally held as stopped to the detent 92 by the central recess 30e. When the transmission lever 2 is shifted from the first/second speed position P12 to the second speed position 2nd, the first/second speed shift fork 30 slides in front, associated with the shifting operation, and stopped to the detent 92 by the rear recess 30e. On the contrary, when the transmission lever 2 is shifted to the first speed position 1st, the first/second speed shift fork 30 slides to the rear, associated with the shifting operation, and stopped to the detent 92 by the front recess 30e.

Similar to the two shift forks 30, 31 described above, the fifth speed/reverse shift fork 32 also comprises a shaft 32a, a fork 32b and an arm 32c which are formed integrally with one another. The fork 32b is fitted in a groove (not shown) of the transmission gear 5a of spline gear type. When the fifth speed/reverse shift fork 32 slides to the rear, the transmission gear 5a of spline gear type is pressed by the fork 32b to slide to the rear, and comes into mesh with the transmission gear 6a of fixed gear type, which constitutes the fifth speed gear pair together with the transmission gear 5a, thereby selecting the fifth speed gear stage.

The shaft 32a is further provided with a reverse arm 32f. The reverse arm 32f is coupled to a reverse shift fork 33 through a pivotable reverse shift lever 32g (see Fig. 1). With this structure, associated with a sliding movement of the fifth speed/reverse shift fork 32 in front, the reverse shift fork 33 is pressed through the reverse shift lever 32g to slide to the rear. The reverse shift fork 33 has a fork 33a which is fitted in a groove (not shown) of a transmission gear 7a of spline gear type. Associated with the sliding movement of the fifth speed/reverse shift fork 32 in front, the reverse shift fork 33 slides to the rear to slide the transmission gear 7a of spline gear type to the rear through the fork 33a. In this way, the transmission gear 7a comes into mesh with the transmission gear 6a of fixed gear type, which constitutes a reverse gear pair together with the transmission gear 7a, thereby selecting the reverse gear stage.

The arm 32c (engaged portion) is also formed with a recess 32d similar to the aforementioned recesses 30d, 31d. As illustrated in Fig. 9A, when the shift piece 40 is pivotally moved in the clockwise direction in Fig. 9A, the arm 44 is fitted into the recess 32d. Further, the shaft 32a is also formed with three recesses 32e similar to the aforementioned recesses 30e, 31e. A detent 94 similar to the aforementioned detent 90 is provided at a location of the main case 3 corresponding to these recesses 32e. The fifth speed/reverse shift fork 32 is normally held as stopped to the detent 92 by the central recess 32e. When the transmission lever 2 is shifted to the reverse position R, the fifth speed/reverse shift fork 32 slides in front, associated with the shifting operation, and stopped to the detent 94 by the rear recess 32e. On the contrary, when the transmission lever 2 is shifted to the fifth speed position 5th, the fifth speed/reverse shift fork 32 slides to the rear and stopped to the detent 94 by the front recess 32e.

Next, description will be made on the operation of the manual transmission 1 configured as described above. With the manual transmission 1, the driver operates the transmission lever 2 along the shift pattern illustrated in Fig. 15 to select any of the first through fifth speed positions 1st - 5th, reverse position R, and neutral position N. First, when the transmission lever 2 is present at the neutral position N, the shift piece 40 and interlock 50 are held in a state illustrated in Fig. 5 by an urging force of the twisted coil spring 57, and the shift piece 40 is coupled to the third/fourth speed shift fork 31. The shift arm 13 in turn is present at a position indicated in Fig. 2, the cam 15 is stopped to the detent 90 by the central recess 15a thereof, and the three shift forks 30 - 32 including the third/fourth speed shift fork 31 are present at positions indicated in Fig. 14.

Assuming that the transmission is changed from the foregoing state to the first speed position 1st, as the transmission lever 2 is first operated to move from the neutral position N to the first/second speed position P12 for selection, the select lever 21 connected to the transmission lever 2 through the transmission cable 2b is pivotally moved upward, and simultaneously, the select arm 23 integrally formed therewith is pivotally moved upward. Associated with the pivotal movement of the select arm 23, the interlock 50 is pivotally moved to a position indicated by a solid line in Fig. 8B in the counter-clockwise direction in Fig. 8B, and comes into contact with and stopped by the stopper shaft 8 at that position. As a result, the transmission lever 2 is held at the first/second speed position P12. Also, the pivotal movement of the interlock 50 causes the guide arms 54 and arm 44 to pivotally move through the recesses 30d - 32d of the shift forks 30 - 32, and the arm 44 is fitted into the recess 32d of the first/second speed shift fork 30. Further, the pin 45 is pivotally moved from the neutral corresponding position N' to the first/second speed corresponding position P12'.

Next, as the transmission lever 2 is shifted from the first/second speed position P12 to the first speed position 1st, the shift lever 11, connected to the transmission lever 2 through the transmission cable 2a, is pivotally moved downward. This causes the shift arm 13 to pivotally move in the counter-clockwise direction in Fig. 2 to slide the shift piece 40 to the rear, so that the shift piece 40 slides the first/second speed shift fork 30 to the rear. As a result, the first/second speed shift fork 30 causes the transmission gears 6a, 5a, which constitute the first speed gear pair, to come into mesh with each other.

Simultaneously with the meshing, the shift piece 40 comes into contact with and stopped by the cam 52 of the interlock 50. Also, the sliding movement of the shift piece 40 causes the pin 45 to move from the first/second speed corresponding position P12' to the first speed corresponding position 1st'. Further, during the sliding movement, the first/second speed shift fork 30 pushes down the ball against an urging force of the detent 92 to once release the engagement of the central recess 30e with the detent 92, and then is stopped again to the detent 92 by the front recess 30e. Further, the cam 15 is pivotally moved, integral with the shift arm 13 in the same direction, to once release the engagement of the central recess 15a with the detent 90, followed by the rear recess 15c engaged again with the detent 92.

In the foregoing manner, the transmission operation is performed from the neutral position N to the first speed position 1st. The transmission operation between other gear positions is performed in a similar manner except for the transmission operation from the fifth speed position 5th to the reverse position R, next described below. In this event, the cam 15 and shift forks 30 - 32 are once released from the stopping state by the detentes 90 - 94, respectively, against urging forces thereof, and subsequently stopped again, so that the driver can be provided with a feeling (clicking) that a transmission operation to each gear position has been completed.

Next, description will be made on the operation of the reverse lock cam mechanism 60. Described first is the operation for preventing a miss shift of the transmission lever 2 from the fifth speed position 5th to the reverse position R. As described above, since the cam 63 is normally held at the blocking position (position indicated in Fig. 11B) by the urging force of the twisted coil spring 64, as the transmission lever 2 present at the fifth speed position 5th is shifted toward the reverse position R as illustrated in Fig. 12, the pin 45 is moved from the fifth speed corresponding position 5th' to the reverse corresponding position R' and comes into contact with the cam face 63e of the arm 63d at a position indicated by a two-dot chain line in Fig. 12. In this way, as the cam 63 is pivotally moved in the counter-clockwise direction in Fig. 12, its cam face 63e guides the pin 45 toward the neutral position N. This prevents the pin 45 from moving toward the reverse corresponding position R', and permits only a movement of the pin 45 to a position corresponding to another forward gear stage position (for example, a movement to a position corresponding to the fourth speed position 4th indicated in Fig. 12). It is therefore possible to prevent a miss shift from the fifth speed position 5th to the reverse position R.

Also, as illustrated in Fig. 13, as the transmission lever 2 is operated from the neutral position N to the fifth speed/R position P5R for selection, the pin 45 is moved from the neutral corresponding position N' to the fifth speed/R corresponding position P5R', comes into contact with the cam 63, and pushes the cam 63 to the left. This causes the cam 63 to pivotally move to the retracting position in the clockwise direction, with the result that the pin 45 reaches the fifth speed/R corresponding position P5R' without being impeded by the cam 63. Thus, the pin 45 can be moved to the fifth speed corresponding position 5th' or reverse corresponding position R', permitting a shift operation to the fifth speed position 5th or reverse position R.

As described above, according to the manual transmission 1 of this embodiment, as the transmission lever 2 is operated for selection, the arm 44 of the shift piece 40 is pivotally moved and selectively coupled to any of the arms 30c - 32c of the shift forks 30 - 32. Then, as the transmission lever 2 is shifted, the arm 44 slides in the longitudinal direction to slide the selectively coupled one of the shift forks 30 - 32. This causes a gear pair, constituting any of the forward first through fifth speed gear stages and reverse gear stage, to come into mesh with each other to perform a transmission operation. Also, since the cam 63 of the reverse lock cam mechanism 60 is held at the blocking position indicated in Fig. 11 by the urging force of the twisted coil spring 64, the pin 45 of the shift piece 40 is guided to the neutral corresponding position N' by the cam face 63e of the cam 63, even if the transmission lever 2 present at the fifth speed position 5th is erroneously operated toward the reverse position R, thereby blocking the transmission lever 2 from moving to the reverse corresponding position R'. In the foregoing manner, it is possible to prevent a miss shift from the fifth speed position 5th to the reverse position R.

Further, since the reverse lock cam mechanism 60 for preventing such a miss shift can be implemented by a small number of simple parts such as the holder 61 having the stopper 61e integrally formed therewith, cam 63, and twisted coil spring 64, so that it is possible to reduce the space required for attaching these parts and increase the degree of freedom for the layout of these parts. In addition, since these parts are attached to the case 3 which contains the shift forks 30 - 32, the reverse gate plate for preventing a miss shift and the like need not be disposed near the transmission lever 2, unlike the prior art, thereby making it possible to correspondingly simplify surroundings of the transmission lever 2, and increase the degree of freedom for the design including the layout of the transmission lever 2. Consequently, the manual transmission 1 can utilize the advantage of the remote control type manual transmission.

Furthermore, the stroke of the transmission lever 2 in the selecting direction, i.e., a pivotable range of the interlock 50 is restricted by stopping the interlock 50 by the stopper shaft 8, while the stroke of the transmission lever 2 in the shifting direction, i.e., a slidable range of the shift piece 40 is restricted by the cam 52 and stay 53 of the interlock 50. In the foregoing manner, each gear stage position can be defined by restricting the strokes of the transmission lever 2 in the selecting direction and shifting direction, so that the conventional guide plate is eliminated, thereby making it possible to further simplify surroundings of the transmission lever 2.

Also, since the stopper 61e, to which the cam 63 is stopped, is arranged near the location at which the holder 61 is fixed to the main case 3, it is possible to prevent the holder 61 from deforming due to an impact applied thereto when the cam 63 comes into contact with the stopper 61e, as compared with the stopper which is arranged at another location.

While the manual transmission 1 of the foregoing embodiment shows an example in which the fifth speed position 5th and reverse position R are arranged side by side in the shifting direction, the present invention is not limited to this arrangement but may be applied to a manual transmission which has a reverse position R and another forward gear stage position (for example, a first speed position 1st) arranged side by side in the shifting direction.

As will be appreciated from the foregoing, the manual transmission according to the present invention can prevent a miss shift from a forward transmission gear stage to a reverse transmission gear stage. In addition, since the configuration for preventing such a miss shift can be implemented by a small number of simple parts such as a blocking member, urging means and the like, it is possible to reduce a space required to attach these parts, and to increase the degree of freedom for the layout of these parts. Further, since these parts are attached to a case which contains shift forks, a reverse gate plate for preventing a miss shift and the like need not be disposed near the transmission lever, unlike the prior art, thereby making it possible to correspondingly simplify surroundings of the transmission lever, and increase the degree of freedom for the design including the layout of the transmission lever. Consequently, when the present invention is applied, for example, to a remote control type manual transmission, the advantage of the remote control type manual transmission can be utilized.

Also, since a selecting position for each gear stage can be defined by restricting the ranges of shift movements and select movements, the conventional guide plate is eliminated, thereby making it possible to further simplify surroundings of the transmission lever.

Further, since the stopper is arranged near the location at which the holder is fixed to the case, it is possible to prevent the holder from deforming due to an impact applied thereto when the cam comes into contact with the stopper, as compared with the stopper which is arranged at another location. In addition, the miss shift can be prevented by a relatively simple configuration composed of a holder, a cam and a stopper.

A manual transmission capable of preventing a miss shift from a forward gear stage to a reverse gear stage during forward running in a compact design and with a higher degree of freedom for the design. The manual transmission comprises a main case, a selector arranged for a pivotal movement and a sliding movement associated with a selecting operation and a shifting operation, respectively, shift forks selectively engageable with the selector for transmission through a pivotal movement of the selector, a reverse lock cam mechanism attached to,the main case, and the like. When the transmission lever is shifted from a fifth speed position to a reverse position, a pin of the selector is moved from a fifth speed corresponding position to a reverse corresponding position, associated with the shifting operation. In this event, as a cam of the reverse lock cam mechanism comes into contact with the pin, the pin is prevented from shifting to the reverse corresponding position.

## Claims

1. A manual transmission (1) comprising:
a case (3);
a selector (4) attached to said case, said selector (4) comprising a shaft (4a) attached to said case (3) and a shift piece (40) with an engaging portion (44), which is attached to said shaft (4a) for movements in an axial direction of said shaft (4a) and pivotal movements about the axis of said shaft (4a),
said selector (4) being arranged for movement in a predetermined selecting direction for selection associated with a selecting operation, and for shifting movement in a predetermined shifting direction associated with a shifting operation, wherein said movement for selection and said shifting movement of said selector (4) are performed by a pivotal movement of said engaging portion (44) about the axis, and a movement of said engaging portion (44) in the axial direction, respectively,
a plurality of shift forks (30, 31, 32) contained in said case (3) and arranged for movement in a predetermined direction, each of said shift forks (30, 31, 32) having an engaged portion (30c, 31c, 32c) with which said engaging portion (44) of said selector (4) selectively comes into engagement,
associated with said movement of said selector (4) for selection, said each shift fork (30, 31, 32) being movable in said predetermined direction through said engaging portion (30c, 31c, 32c) and said engaged portion (44) associated with said shifting movement of said selector (4) to select any of a plurality of forward transmission gear stages and a reverse transmission gear stage;
said selector (4) being configured to take a forward position and a reverse position when selecting a predetermined one of said plurality of forward transmission gear stages and said reverse transmission gear stage, respectively, said forward position and said reverse position being defined on both sides in said shifting direction of a predetermined intermediate position in said selecting direction;
a blocking member (63) attached to said case, said blocking member (63) being movable between a blocking position at which said blocking member (63) comes into contact with said selector (4) when said selector (4) is shifted from said forward position to said reverse position to block said selector (4) from shifting to said reverse position, and a retracting position retracted from said blocking position; and urging means (64) for urging said blocking member (63) toward said blocking position; and
a pivotal movement restricting member (8) is provided in said case (3);
**characterized in that**
said selector (4) comprises an interlock (50) attached to said shaft for pivotal movement integral with said shift piece (40),
said interlock includes two axial movement restricting members (52, 53, 55) spaced apart from each other by a predetermined spacing for restricting a movable range of said shift piece (40) in the axial direction within said shift movement, and
said pivotal movement restricting member (8) stops said interlock (50) at two predetermined pivotal positions to restrict a pivotable range of said interlock (50) within a range corresponding to said movement for selection.

2. A manual transmission according to claim 1, wherein the interlock (50) comprises a base (51), a cam (52), a stay (53) and a pair of guide arms (54), all of which are formed integrally with one another, wherein:
the cam (52) has a restricting recess (52c) which comes into contact with the pivotal movement restricting member (8) and thus stops the interlock (50) at the two predetermined pivotal positions, and
the base (50) has an elongated hole (55) formed therein, and
wherein the range of an axial movement of the shift piece (40) is restricted either by the shift piece (40) coming into contact with the cam (52) and stay (53), respectively, or by the shift piece (40) coming into contact with the edges of the elongated hole (55) in the base (51).

3. A manual transmission (1) according to claim 1, further comprising a holder (61) having a stopper (61e) integrally formed therewith, said holder (61) being fixed to said case (3) near said stopper (61e), wherein:
said blocking member (63) comprises a cam (63) pivotably attached to said holder (61), said cam (63) coming into contact with said stopper (61e) to stop at said retracting position, and
said selector (4) is configured movable to said intermediate position between said forward position and said reverse position to pivotally move said cam (63) from said blocking position to said retracting position.

## Patentansprüche

1. Handschaltgetriebe (1), umfassend:
ein Gehäuse (3);
eine an dem Gehäuse angebrachte Gangwahleinrichtung (4), wobei die Gangwahleinrichtung (4) eine an dem Gehäuse (3) angebrachte Welle (4a) und ein Schaltstück (40) mit einem Eingriffsabschnitt (44) aufweist, welches an der Welle (4a) für Bewegungen in einer axialen Richtung der Welle (4a) und Schwenkbewegungen um die Achse der Welle (4a) angebracht ist,
wobei die Gangwahleinrichtung (4) für eine Bewegung in einer vorbestimmten Gangwahlrichtung für eine einer Gangwahlbetätigung zugeordneten Gangwahl, und für eine Schaltbewegung in einer vorbestimmten Schaltrichtung, die einer Schaltbetätigung zugeordnet ist, eingerichtet ist, wobei die Bewegung für eine Gangwahl und die Schaltbewegung der Gangwahleinrichtung (4) jeweils durch eine Schwenkbewegung des Eingriffsabschnitts (44) um die Achse und durch eine Bewegung des Eingriffsabschnitts (44) in der axialen Richtung durchgeführt werden,
eine Mehrzahl von Schaltgabein (30, 31, 32), welche in dem Gehäuse (3) aufgenommen und für eine Bewegung in einer vorbestimmten Richtung eingerichtet sind, wobei jede der Schaltgabeln (30, 31, 32) einen Gegen-Eingriffsabschnitt (30c, 31c, 32c) aufweist, in den der Eingriffsabschnitt (44) der Gangwahleinrichtung (4) selektiv eingreift,
wobei der für eine Gangwahl zugeordneten Bewegung der Gangwahleinrichtung (4) jede Schaltgabel (30, 31, 32) in der vorbestimmten Richtung durch den Eingriffsabschnitt (44) und den Gegen-Eingriffsabschnitt (30c, 31c, 32c) einer Schaltbewegung der Gangwahleinrichtung (4) zugeordnet bewegbar ist, um einen beliebigen aus einer Mehrzahl von Vorwärts-Getriebe-Übersetzungszuständen und einem Rückwärts-Getriebe-Übersetzungszustand auszuwählen;
wobei die Gangwahleinrichtung (4) derart aufgebaut ist, dass sie eine vordere und eine hintere Position einnimmt, wenn sie jeweils einen vorbestimmten der Mehrzahl von Vorwärts-Getriebe-Übersetzungszuständen und des Rückwärts-Getriebe-Übersetzungszustands auswählt, wobei die vordere Position und die hintere Position in der Schaltrichtung an beiden Seiten einer vorbestimmten mittleren Position in der Gangwahlrichtung definiert sind;
ein an dem Gehäuse (3) angebrachtes Sperrelement (63), wobei das Sperrelement (63) zwischen einer Sperrposition, in der das Sperrelement (63) in Berührung mit der Gangwahleinrichtung (4) kommt, wenn die Gangwahleinrichtung von der vorderen Position zur hinteren Position bewegt wird, um die Gangwahleinrichtung (4) daran zu sperren, dass sie zu der hinteren Position schaltet, und einer zurückgezogenen Position bewegbar ist, welche von der Sperrposition zurückgezogen ist; und Spannmittel (64) zum Spannen des Sperrelements (63) in Richtung auf die Sperrposition; und
wobei ein Schwenkbewegungs-Begrenzungselement (8) in dem Gehäuse (3) vorgesehen ist;
**dadurch gekennzeichnet, dass**
die Gangwahleinrichtung (4) eine Sperre (50) aufweist, die an der Welle für eine mit dem Schaltstück (40) integrale Schwenkbewegung angebracht ist, aber daran gehindert ist, sich in einer Längsrichtung relativ zum Gehäuse (3) zu bewegen, wobei die Sperre (50) zwei Axialbewegungs-Begrenzungselemente (52, 53, 55) aufweist, welche mit einem vorbestimmten Abstand voneinander entfernt angeordnet sind, um einen Bewegungsbereich des Schaltstücks (40) in der axialen Richtung bei der Schaltbewegung zu begrenzen, und
wobei das Schwenkbewegungs-Begrenzungselement (8) die Sperre (50) an zwei vorbestimmten Schwenkpositionen stoppt, um einen Schwenkbereich der Sperre (50) innerhalb eines Bereichs, der der Bewegung für eine Gangwahl entspricht, zu begrenzen.

2. Handschaltgetriebe nach Anspruch 1, wobei die Sperre (50) eine Basis (51), einen Nocken (52), eine Stütze (53) und ein Paar von Führungsarmen (54) umfasst, welche alle integral miteinander gebildet sind, wobei:
der Nocken (52) eine Begrenzungsausnehmung (52c) aufweist, welche in Berührung mit dem Schwenkbewegungs-Begrenzungselement (8) kommt, und daher die Sperre (50) an den beiden vorbestimmten Schwenkpositionen stoppt, und
die Basis (50) ein darin gebildetes Langloch aufweist, und
wobei der Bereich der axialen Bewegung des Schaltstücks (40) entweder **dadurch** begrenzt ist, dass das Schaltstück (40) jeweils in Berührung mit dem Nocken (52) und der Stütze (53) kommt, oder dass das Schaltstück (40) in Berührung mit den Kanten des Langlochs (55) in der Basis (51) kommt.

3. Handschaltgetriebe (1) nach Anspruch 1, femer umfassend eine Halterung (61), welche einen integral damit gebildeten Stopper (61e) aufweist, wobei die Halterung (61) an dem Gehäuse in der Nähe des Stoppers (61e) angebracht ist, wobei:
das Sperrelement (63) einen Nocken (63) umfasst, welcher schwenkbar an der Halterung (61) angebracht ist, wobei der Nocken (63) in Berührung mit dem Stopper (61e) kommt, um an der zurückgezogenen Position zu stoppen, und
die Gangwahleinrichtung (4) derart aufgebaut ist, dass sie von der mittleren Position zwischen der vorderen Position und der hinteren Position bewegbar ist, um den Nocken (63) schwenkend von der Sperrposition zu der zurückgezogenen Position zu bewegen.

## Revendications

1. Boîte de vitesse manuelle (1) comprenant :
un carter (3) ;
un sélecteur (4) fixé audit carter, ledit sélecteur (4) comprenant un arbre (4a) fixé audit carter (3) et une pièce de déplacement (40) avec une partie de mise en prise (44), qui est fixée audit arbre (4a) pour des mouvements dans une direction axiale dudit arbre (4a) et des mouvements pivotaux autour de l'axe dudit arbre (4a),
ledit sélecteur (4) étant disposé pour un mouvement dans une direction de sélection prédéterminée pour une sélection associée à une opération de sélection, et pour un mouvement de déplacement dans une direction de déplacement prédéterminée associé à une opération de déplacement, dans lequel ledit mouvement de sélection et ledit mouvement de déplacement dudit sélecteur (4) sont exécutés par un mouvement pivotal de ladite partie de mise en prise (44) autour de l'axe, et un mouvement de ladite partie de mise en prise (44) dans la direction axiale, respectivement,
une pluralité de fourchettes d'embrayage (30, 31, 32) contenues dans ledit carter (3) et disposées pour un mouvement dans une direction prédéterminée, chacune desdites fourchettes d'embrayage (30, 31, 32) présentant une partie mise en prise (30c, 31c, 32c) avec laquelle ladite partie de mise en prise (44) dudit sélecteur (4) vient sélectivement en mise en prise,
associée audit mouvement dudit sélecteur (4) pour la sélection, chacune desdites fourchettes d'embrayage 30(30, 31, 32) étant mobile dans ladite direction prédéterminée à travers ladite partie de mise en prise (44) et ladite partie mise en prise (30c, 31c, 32c) associée audit mouvement de déplacement dudit sélecteur (4) pour sélectionner une quelconque d'une pluralité de vitesses avant et une vitesse arrière ;
ledit sélecteur (4) étant configuré pour prendre une position avant et une position arrière lors de la sélection d'une vitesse prédéterminée parmi ladite pluralité de vitesses avant et de ladite vitesse arrière, respectivement, ladite position avant et ladite position arrière étant définies des deux côtés dans ladite direction de déplacement d'une position intermédiaire prédéterminée dans ladite direction de sélection ;
un élément de blocage (63) fixé audit carter, ledit élément de blocage (63) étant mobile entre une position de blocage au niveau de laquelle ledit élément de blocage (63) vient en contact avec ledit sélecteur (4) quand ledit sélecteur (4) est déplacé de ladite position avant à ladite position arrière pour empêcher ledit sélecteur (4) de se déplacer vers ladite position arrière, et une position de rétraction rétractée de ladite position de blocage ; et des moyens de poussée (64) pour pousser ledit élément de blocage (63) vers ladite position de blocage ; et
un élément de restriction de mouvement pivotal (8) est fourni dans ledit carter (3) ;
**caractérisée en ce que**
ledit sélecteur (4) comprend un enclenchement (50) fixé audit arbre pour un mouvement pivotal intégré à ladite pièce de déplacement (40), mais désactivé pour se déplacer dans une direction longitudinale par rapport au carter (3), ledit enclenchement comprend deux éléments de restriction de mouvement axial (52, 53, 55) espacés l'un de l'autre par un espacement prédéterminé pour restreindre un rayon mobile de ladite pièce de déplacement (40) dans la direction axiale à l'intérieur dudit mouvement de déplacement, et
ledit élément de restriction de mouvement pivotal (8) arrête ledit enclenchement (50) au niveau de deux positions pivotales prédéterminées pour restreindre un rayon pivotable dudit enclenchement (50) dans un rayon pouvant pivoter correspondant audit mouvement pour la sélection.

2. Boîte de vitesse manuelle selon la revendication 1, dans laquelle l'enclenchement (50) comprend une base (51), une came (52), un potelet (53) et une paire de bras de guidage (54), tous ces éléments font partie intégrante les uns des autres, dans laquelle :
la came (52) présente un encastrement de restriction (52c) qui vient en contact avec l'élément de restriction de mouvement pivotal (8) et arrête ainsi l'enclenchement (50) au niveau des deux positions pivotales prédéterminées, et
la base (50) présente un trou oblong (55) formé à l'intérieur, et dans lequel le rayon d'un mouvement axial de la pièce de déplacement (40) est restreint soit par la pièce de déplacement (40) venant en contact avec la came (52) et le potelet (53), respectivement, soit par la pièce de déplacement (40) venant en contact avec les bords du trou oblong (55) dans la base (51).

3. Boîte de vitesse manuelle (1) selon la revendication 1, comprenant en outre un support (61) présentant une butée (61e) faisant partie intégrante de celui-ci, ledit support (61) étant fixé audit carter (3) à proximité de ladite butée (61e), dans laquelle :
ledit élément de blocage (63) comprend une came (63) fixée de manière pivotante audit support (61), ladite came (63) venant en contact avec ladite butée (61e) pour s'arrêter au niveau de ladite position de rétraction, et
ledit sélecteur (4) est configuré comme étant mobile par rapport à ladite position intermédiaire entre ladite position avant et ladite position arrière pour déplacer de manière pivotante ladite came (63) de ladite position de blocage vers ladite position de rétraction.
